# EUROPEAN PATENT SPECIFICATION

(11) **EP 2 370 231 B1**
(45) Date of publication and mention of the grant of the patent: **12.03.2014**
(21) Application number: 09832399.1
(22) Date of filing: 03.12.2009
(51) Int. Cl.: B24D 3/20, B24D 5/12

(54) **BONDED ABRASIVE ARTICLE**
GEBONDETER SCHLEIFARTIKEL
ARTICLE ABRASIF LIÉ

(30) Priority: 12.12.2008 US 121950 P
(43) Date of publication of application: 05.10.2011
(73) Proprietor: 3M Innovative Properties Company, Saint Paul, MN 55133-3427 (US)
(72) Inventor: LEE, Doo-Hyun, Seoul 150-705 (KR); CHOI, Yeon-Ho, Seoul 150-705 (KR)
(74) Representative: Vossius & Partner
(86) International application number: PCT/US2009/066492
(87) International publication number: WO 2010/068543

(56) References cited:
- WO-A2-02/28802
- US-A- 5 876 470
- US-A1- 2005 032 469

## Description

### TECHNICAL FIELD

The present disclosure relates to bonded abrasive articles, their use, and manufacture.

### BACKGROUND

Bonded abrasive articles include, for example, grinding wheels, stones, hones, and cut-off wheels. The bonding medium used to hold or bond the abrasive particles within the wheel is typically an organic resin, but may also be inorganic materials such as ceramics or glasses (that is, vitreous bonds).

Cut-off wheels are typically thin wheels used for general cutting operations. The wheels are typically about 5 to about 40 centimeters in diameter, and several millimeters thick. They may be operated at speeds from about 1000 to 50,000 revolutions per minute, and are used for operations such as cutting metal or glass, for example, to nominal lengths. Cut-off wheels are also known as "industrial cut-off saw blades" and, in some settings such as foundries, as "chop saws". As their name implies, cut-off wheels are use to cut stock such as, for example, metal rods, by abrading through the stock. One problem that has continually plagued bonded abrasives such as, for example, cut-off wheels grinding wheels has been excessive heating that can occur during abrading, and which may lead to aesthetic and/or structural damage to the workpiece. Excessive heating may also lessen the life and/or performance of the cut-off wheel itself.

There is disclosed in US 2,876,470 A a bonded abrasive article, particularly a cut-off wheel, which may comprise blue fused aluminum oxide particles, sol-gel alumina-based abrasive particles, wherein the sol-gel alumina-based abrasive particles comprise alpha alumina and rare earth oxide modified alpha alumina, a phenolic binder and cryolite.

The abrasives industry is continuously searching for ways to improve the performance (for example, cut rate) of cut-off wheels, while simultaneously avoiding excessive heat generation during abrading.

### SUMMARY

In one aspect, the present disclosure provides a bonded abrasive article comprising, on a total weight basis: 30 to 37 percent by weight of ceramic-coated blue fused aluminum oxide particles; 30 to 37 percent by weight of non-seeded sol-gel alumina-based abrasive particles; wherein the non-seeded sol-gel alumina-based abrasive particles are composed of crystallites of alpha alumina, magnesium alumina spinel, and rare earth hexagonal aluminate; a phenolic binder that comprises a reaction product of 8 to 12 percent by weight of curable novolac phenolic resin and 2.1 to 5.1 percent by weight of curable resole phenolic resin; 3 to 6 percent by weight of metal fibers having a length of 5 millimeters or less; 8 to 11 percent by weight of cryolite; and 0.1 to 0.3 percent by weight of electrically conductive particles.

In another aspect, the present disclosure provides a method of making a bonded abrasive article, the method comprising:
combining: 30 to 37 percent by weight of ceramic-coated blue fused aluminum oxide particles; 30 to 37 percent by weight of non-seeded sol-gel alumina-based abrasive particles; wherein the non-seeded sol-gel alumina-based abrasive particles are composed of crystallites of alpha alumina, magnesium alumina spinel, and rare earth hexagonal aluminate; 8 to 12 percent by weight of curable novolac phenolic resin; 2.1 to 5.1 percent by weight of curable resole phenolic resin; 3 to 6 percent by weight of metal fibers having a length of 5 millimeters or less; 8 to 11 percent by weight of cryolite; 0.1 to 0.3 percent of a silane coupling agent; and 0.1 to 0.3 percent by weight of electrically conductive particles; and
curing the curable novolac phenolic resin and curable resole phenolic resin.

In certain embodiments, the cryolite comprises a cryolite. In certain embodiments, the metal fibers comprise aluminum fibers. In certain embodiments, the metal fibers comprise short aluminum fibers. In certain embodiments, the silane coupling agent comprises a gamma-aminopropyltrialkoxysilane.

In certain embodiments, the bonded abrasive article further comprises polytetrafluorethylene particles.

Bonded abrasive articles according to the present disclosure as useful, for example, as cut-off wheels.

### BRIEF DESCRIPTION OF THE DRAWINGS

Fig. 1 is a perspective view of an exemplary cut-off wheel according to one embodiment of the present disclosure; and
Fig. 2 is a cross-sectional side view of exemplary cut-off wheel shown in Fig. 1 taken along line 2-2.

### DETAILED DESCRIPTION

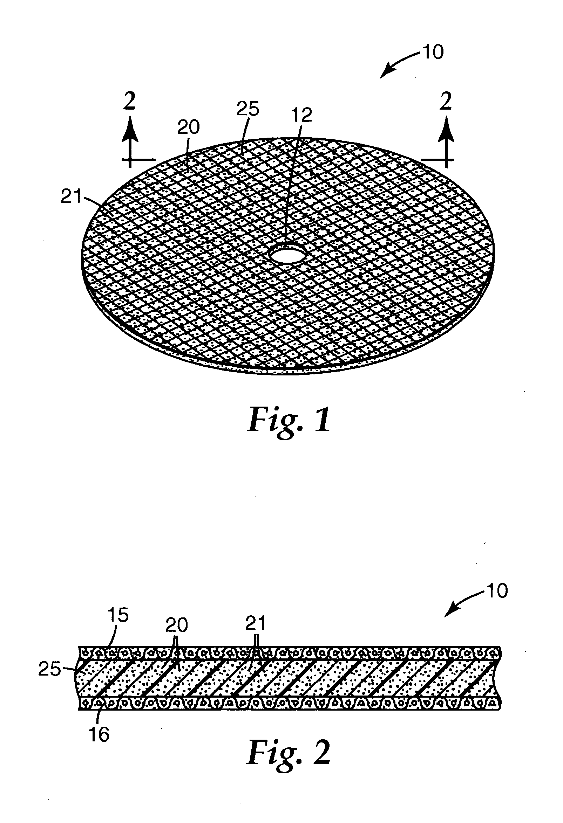

FIG. 1 is a perspective view of an exemplary bonded abrasive article shown as cut-off wheel 10 made according to one embodiment of the present disclosure. Center hole 12 is used for attaching cut-off wheel 10 to, for example, a power driven tool. Cut-off wheel 10 has ceramic-coated blue fused aluminum oxide particles 20 and non-seeded sol-gel alumina-based abrasive particles 21 held together by phenolic binder 25.

FIG. 2 is a cross-section of the cut-off wheel of FIG. 1 taken along line 2-2. Ceramic-coated blue fused aluminum oxide particles 20 and non-seeded sol-gel alumina-based abrasive particles 21 and binder 25 are shown. Cut-off wheel 10 has first scrim 15 and second scrim 16 which are disposed on opposite major surfaces of cut-off wheel 10.

The abrasive particles include 30 to 37 percent by weight of ceramic-coated blue fused aluminum oxide particles. Such abrasive particles are available commercially, for example, from Treibacher Schleifmittel of Vilach, Austria under the trade designation ALODUR BZESCC (a ceramic-coated high temperature treated blue fused aluminum oxide, blocky grain shape).

The abrasive particles also include 30 to 37 percent by weight of non-seeded sol-gel alumina-based abrasive particles composed of crystallites of alpha alumina, magnesium alumina spinel, and a rare earth hexagonal aluminate. Such abrasive particles and methods for their manufacture are described in, for example, U. S. Pat. Nos. 5,312,789; 5,431,705; 5,551,964; and 5,660,604 (all to Wood). Such abrasive particles are also available commercially; for example, from 3M Company of Saint Paul, Minnesota as 3M CUBITRON GRAIN, 300 series (for example, 3M CUBITRON GRAIN 311, or 3M CUBITRON GRAIN 324), abrasive particles.

Typically, the ceramic-coated blue fused aluminum oxide particles and the non-seeded sol-gel alumina-based abrasive particles are independently sized according to an abrasives industry recognized specified nominal grade. Exemplary abrasive industry recognized grading standards include those promulgated by ANSI (American National Standards Institute), FEPA (Federation of European Producers of Abrasives), and JIS (Japanese Industrial Standard). Such industry accepted grading standards include, for example: ANSI 4, ANSI 6, ANSI 8, ANSI 16, ANSI 24, ANSI 30, ANSI 36, ANSI 40, ANSI 50, ANSI 60, ANSI 80, ANSI 100, ANSI 120, ANSI 150, ANSI 180, ANSI 220, ANSI 240, ANSI 280, ANSI 320, ANSI 360, ANSI 400, and ANSI 600; FEPA P8, FEPA P12, FEPA P16, FEPA P24, FEPA P30, FEPA P36, FEPA P40, FEPA P50, FEPA P60, FEPA P80, FEPA P100, FEPA P120, FEPA P150, FEPA P180, FEPA P220, FEPA P320, FEPA P400, FEPA P500, FEPA P600, FEPA P800, FEPA P1000, and FEPA P1200; and JIS 8, JIS 12, JIS 16, JIS 24, JIS 36, JIS 46, JIS 54, JIS 60, JIS 80, JIS 100, JIS 150, JIS 180, JIS 220, JIS 240, JIS 280, JIS 320, JIS 360, JIS 400, JIS 400, JIS 600, JIS 800, JIS 1000, JIS 1500, JIS 2500, JIS 4000, JIS 6000, JIS 8000, and JIS 10,000. More typically, the ceramic-coated blue fused aluminum oxide particles and the non-seeded sol-gel alumina-based abrasive particles are independently sized to ANSI 30 or FEPA P30 grading standards.

The abrasive particles may, for example, be uniformly or non-uniformly throughout the bonded abrasive article. For example, if the bonded abrasive article is a grinding wheel or a cut-off wheel, the abrasive particles may be concentrated toward the middle (for example, located away from the outer faces of a grinding or cut-off wheel), or only in the outer edge, that is, the periphery, of a grinding or cut-off wheel. In another variation, first abrasive particles may be in one side of the wheel with different abrasive particles on the opposite side. However, typically all the abrasive particles are homogenously distributed among each other, because the manufacture of the wheels is easier, and the cutting effect is optimized when the two types of grain are closely positioned to each other.

Bonded abrasive articles according to the present disclosure may comprise additional abrasive particles beyond those mentioned above, subject to weight range requirements of the other constituents being met. Examples include fused aluminum oxide (including fused alumina-zirconia), brown aluminum oxide, blue aluminum oxide, silicon carbide (including green silicon carbide), garnet, diamond, cubic boron nitride, boron carbide, chromia, ceria, and combinations thereof.

Bonded abrasive articles according to the present disclosure include cured novolac phenolic and resole phenolic resins as the bonding medium. Novolac phenolic resins are characterized by being acid-catalyzed and having a ratio of formaldehyde to phenol of less than one, typically between 0.5:1 to 0.8:1. Resole phenolic resins are characterized by being alkaline catalyzed and having a ratio of formaldehyde to phenol of greater than or equal to one, typically from 1:1 to 3:1. Novolac and resole phenolic resins may be chemically modified (for example, by reaction with epoxy compounds), or they may be unmodified. Exemplary acidic catalysts suitable for curing phenolic resins include sulfuric, hydrochloric, phosphoric, oxalic, and p-toluenesulfonic acids. Alkaline catalysts suitable for curing phenolic resins include sodium hydroxide, barium hydroxide potassium hydroxide, calcium hydroxide, organic amines, or sodium carbonate.

The curable novolac resin is used in such an amount that, after curing, the resultant novolac phenolic resin is present in an amount of 6 to 12 percent by weight, typically 8 to 10 percent by weight, based of the total weight of the bonded abrasive article. Novolac phenolic resins are well-known and readily available from commercial sources. Examples of commercially available novolac resins include those marketed by Borden Chemical Co. of Columbus, Ohio under the trade designation "DURITE" (for example, DURITE SD-1708, SL-1710, SD-1502, SD-1702, SD-1731, SD-1734, SD-241A, SD-423A, RD-2414, SD-5132, SD-7280, SD-1502, or SD-500C); those marketed by Georgia Pacific of Atlanta, Georgia as HRJ-11040, 1166, 1583, 2210, 2355, or 2901; those marketed by Schenectady International of Schenectady, New York as CRJ-406, and FRJ-425/200; and those marketed by Kangnam Chemical Company Ltd. of Seoul, South Korea under the trade designation "PHENOLITE" (for example, PHENOLITE TD-739).

The curable resole phenolic resin is used in such an amount that, after curing, the resultant novolac phenolic resin is present in an amount of 2.1 to 5.1 percent by weight, typically 4 to 6 percent by weight, based of the total weight of the bonded abrasive article. Resole phenolic resins are well-known and readily available from commercial sources. Examples of commercially available resole phenolic resins useful in practice of the present disclosure include those marketed by Durez Corporation of Addison, Texas under the trade designation VARCUM (for example, 29217, 29306, 29318, 29338, 8121, or 7716); those marketed by Ashland Chemical Co. of Bartow, Florida under the trade designation AEROFENE (for example, AEROFENE 295); and those marketed by Kangnam Chemical Company Ltd. of Seoul, South Korea under the trade designation "PHENOLITE" (for example, PHENOLITE TD-2207).

Bonded abrasive articles according to the present disclosure include 3 to 6 percent by weight of metal fibers. The metal fibers may have any length below about 5 mm. Typically, the metal fibers have a length in a range of 2 mm or less, more typically, 1.5 mm or less. Examples of metal fibers include aluminum fibers, nickel fibers, zinc fibers, stainless steel fibers, titanium fibers, copper fibers, alloys thereof, and combinations thereof.

Bonded abrasive articles according to the present disclosure include 8 to 11 percent by weight of cryolite.

In some embodiments, bonded abrasive articles according to the present disclosure contain additional grinding aids such as, for example, polytetrafluoroethylene particles, in amounts of 8 to 11 percent by weight, subject to weight range requirements of the other constituents being met.

Bonded abrasive articles according to the present disclosure include 0.1 to 0.3 percent by weight of electrically conductive particles. Examples include graphite, carbon black and vanadium pentoxide.

Bonded abrasive articles according to the present disclosure may contain additional components such as, for example, filler particles, subject to weight range requirements of the other constituents being met. Filler particles may be added to occupy space and/or provide porosity. Porosity enables the bonded abrasive article to shed used or worn abrasive grain to expose new or fresh abrasive grain.

Bonded abrasive articles according to the present disclosure have any range of porosity; for example, from about 1 percent to 50 percent, typically 1 percent to 40 percent by volume. Examples of fillers include bubbles and beads (for example, glass, ceramic (alumina), clay, polymeric, metal), cork, gypsum, marble, limestone, flint, silica, aluminum silicate, and combinations thereof

Bonded abrasive articles according to the present disclosure include 0.1 to 0.3 percent by weight of electrically conductive particles.

Bonded abrasive articles according to the present disclosure can be made according by any suitable method. In one suitable method, a coupling agent and the curable resole phenolic are combined with mixing. To this mixture are added with stirring the ceramic-coated blue fused aluminum oxide particles and the non-seeded sol-gel alumina-based abrasive particles the abrasive particles. The amount of coupling agent is generally selected such that it is present in an amount of 0.1 to 0.3 parts for every 50 to 84 parts of abrasive particles, although amounts outside this range may also be used. To the resulting mixture is added the curable novolac phenolic resin and the electrically conductive particles. The mixture is aged for about 24 hours and filtered to remove excess liquids. The mixture is pressed into a mold (for example, at an applied pressure of 70 - 110 kilograms per square centimeter and a temperature of 30 to 40 °C). The molded article is then cured by heating at temperatures up to about 220 °C for sufficient time to cure the curable phenolic resins.

Coupling agents are well-known to those of skill in the abrasive arts. Examples of coupling agents include trialkoxysilanes (for example, gamma-aminopropyltriethoxysilane), titanates, and zirconates.

Bonded abrasive articles according to the present disclosure are useful, for example, as cut-off wheels. Cut-off wheels are typically 1 millimeter (mm) to 16 mm, more typically 1 mm to 8 mm , and typically have a diameter between 2.5 cm and 100 cm (40 inches), more typically between about 7 cm and 13 cm, although other dimension may also be used (for example, wheels as large as 100 cm in diameter are known. An optional center hole may be used to attaching the cut-off wheel to a power driven tool. If present, the center hole is typically 0.5 cm to 2.5 cm in diameter, although other sizes may be used. The optional center hole may be reinforced; for example, by metal collars. Alternatively a mechanical fastener may be axially secured to one surface of the cut-off wheel. Examples include threaded posts, threaded nuts, Tinnerman nuts, and bayonet mount posts. Optionally, bonded abrasive articles according to the present disclosure may further comprise a scrim and that reinforces the bonded abrasive article; for example, disposed on one or two major surfaces of the bonded abrasive article, or disposed within the bonded abrasive article. Examples of scrims include a woven or a knitted cloth. The fibers in the scrim may be made from glass fibers (for example, fiberglass), organic fibers such as polyamide, polyester, or polyimide. In some instances, it may be desirable to include reinforcing staple fibers within the bonding medium, so that the fibers are homogeneously dispersed throughout the cut-off wheel.

Bonded abrasive articles according to the present disclosure are useful, for example, for abrading a workpiece. For example, they may be formed into cut-off wheels that exhibit good grinding characteristics while maintaining a relatively low operating temperature that may avoid thermal damage to the workpiece.

Objects and advantages of this disclosure are further illustrated by the following non-limiting examples, but the particular materials and amounts thereof recited in these examples, as well as other conditions and, details, should not be construed to unduly limit this disclosure.

### EXAMPLES

Unless otherwise noted, all parts, percentages, ratios, etc. in the Examples and the rest of the specification are by weight.

### MATERIALS USED IN THE EXAMPLES

| ABBREVIATION | DESCRIPTION |
|---|---|
| AF | Aluminum metal fiber, 10-20 micrometer diameter by less than 1 mm long, obtained from Future Metals Pvt. Ltd. of Seoul, South Korea |
| AP1 | FEPA P 30 grade (625 micrometers mean particle diameter) calcined, blocky grain shape, ceramic-coated blue fused aluminum oxide, obtained as ALODUR BZESCC-F 30 from Treibacher Schleifmittel of Vilach, Austria |
| AP2 | ANSI 30 grade (638 micrometers mean particle diameter) non-seeded sol-gel alumina-based abrasive particles obtained as CUBITRON 321 from 3M Company of St. Paul, Minnesota. 3M CUBITRON GRAIN 321 abrasive particles has a complex, polycrystalline microstructure composed of crystallites of alpha alumina, magnesium alumina spinel and a rare earth hexagonal aluminate. |
| AP3 | Brown aluminum oxide, FEPA P 30 grade, obtained as BROWN ALUMINUM OXIDE P 30 from Zheng Zhou Abrasives Factory, China. |
| AP4 | White aluminum oxide - FEPA P 30 grade, obtained as WHITE ALUMINUM OXIDE P 30 from Zheng Zhou Abrasives Factory, China. |
| AP5 | Aluminum zirconia, FEPA P 30 grade, obtained as ALODUR ZK 40 F30 from Treibacher Scheifmittel of Vilach, Austria. |
| CA | gamma-Aminopropyltriethoxysilane, alkoxyilane coupling agent, obtained as Z-6011 from Dow Coming of Midland, Michigan |
| CRY | Synthetic cryolite (Na₃AlF₆), obtained from MetaChem Company of Seoul, Korea |
| LUB | Carbon black, obtained as HC-598 from Hyundai Coma Company Ltd. of Seoul, Korea |
| PR1 | Curable novolac phenolic resin, obtained as PHENOLITE TD-739 from Kangnam Chemical Company Ltd. of Seoul, Korea |
| PR2 | Curable resole phenolic resin, 72 percent solids in water, obtained as PHENOLITE TD-2207 from Kangnam Chemical Company Ltd. |

### EXAMPLE 1 and COMPARATIVE EXAMPLES A-K

For each example, mixture of 36 parts of each of two abrasive grains (or 72 parts of a single grain), 0.2 parts of CA, were mixed with 3.7 parts of PR2 in a paddle mixer. Meanwhile, 9 parts of PR1, 10 parts of CRY, and 5 parts of AF were mixed together. The wet mixture of resin and abrasive grain was slowly added to the dry powder mixture and tumbled. The mixed composition was aged for 24 hours, and then filtered to separate any free liquid to remove any large sized resin-coated agglomerates.

Half of the mixture was loaded into the mold of a hydraulic press machine. A glass fiber scrim (obtained as "385", 8 yarns/in warp and weft, plain weave, 216 g/m² from Hankuk Fiber Glass Company Ltd., Seoul, Korea) was loaded on this mixture in the mold, and then the residual mixtures was loaded into the mold. The combination was then pressed at about 70-110 kg/cm² to produce a 16-inch cut-off wheel. The resulting cut-off wheel was placed between steel plates. The compressed stack was placed in an oven which is heated at 200 °C, and then maintained a temperature for about 24 hours, and cooled. The dimensions of the final cut-off wheel are 405 mm x 2.5-4.0 mm x 25.4mm.

A 16-inch cut-off wheel was mounted on a chop saw. The horse power of the chop saw was 5 HP (maximum speed: 3850 revolutions per minute). The workpiece was three stacked pieces of 50 mm x 50 mm x 4 mm 'L' type 45C angle steel. The grinding wheel was used to repeatedly cut through the workpiece until the grinding wheel no longer cut all the way through the steel angle workpiece and the remainder wheel size is 230 mm. The original color of steel work piece was silver. The maximum number of cutting cycles and optionally cut rate and workpiece color at the cut site for each example wheel are given in Table 1 (below).

**TABLE 1**

| Example | Amount of abrasive grain, parts | | | | | Cut Rate, seconds | Maximum Cutting Cycles |
|---|---|---|---|---|---|---|---|
| | AP1 | AP2 | AP3 | AP4 | AP5 | | |
| Example 1 | 36 | 36 | - | - | - | 8.3 | 145 |
| Comparative Example A | 36 | - | 36 | - | - | - | 110 |
| Comparative Example B | 36 | - | - | 36 | - | - | 90 |
| Comparative Example C | 36 | - | - | - | 36 | - | 110 |
| Comparative Example D | - | 72 | - | - | - | - | 100 |
| Comparative Example E | - | - | 72 | - | - | - | 70 |
| Comparative Example F | - | - | - | 72 | - | - | 60 |
| Comparative Example G | - | - | - | - | 72 | - | 70 |
| Comparative Example H | 28.8 | 43.2 | - | - | - | 8.8 | 130 |
| Comparative Example I | 21.6 | 50.4 | - | - | - | 9.4 | 126 |
| Comparative Example J | 7.2 | 64.8 | - | - | - | 10.9 | 105 |
| Comparative Example K | - | 72 | - | - | - | 11.2 | 100 |

The procedure of Example 1 was repeated except that the amounts CRY and AF were varied as reported in Table 2 (below).

**TABLE 2**

| Example | Cryolite, weight percent | Aluminum fiber, weight percent | Color of workpiece after cutting | Heat generation |
|---|---|---|---|---|
| Example 1 | 15 | 5 | silver | low |
| Example 2 | 10 | 10 | silver | very low |
| Comparative Example L | 20 | 0 | blue | high |
| Comparative Example M | 10 | 0 | dark blue | very high |
| Comparative Example N | 18 | 2 | blue | high |

Unless otherwise specified are numerical ranges in the specification and claims are inclusive of their endpoints (for example, 30 to 37 percent includes both 30 and 37 percent).

Various modifications and alterations of this disclosure may be made by those skilled in the art within the scope of this disclosure defined by the claims, and it should be understood that this disclosure is not to be unduly limited to the illustrative embodiments set forth herein.

## Claims

1. A bonded abrasive article comprising, on a total weight basis: 30 to 37 percent by weight of ceramic-coated blue fused aluminum oxide particles (20); 30 to 37 percent by weight of non-seeded sol-gel alumina-based abrasive particles (21), wherein the non-seeded sol-gel alumina-based abrasive particles (21) are composed of crystallites of alpha alumina, magnesium alumina spinel, and rare earth hexagonal aluminate; a phenolic binder (25) that comprises a reaction product of 8 to 12 percent by weight of curable novolac phenolic resin and 2.1 to 5.1 percent by weight of curable resole phenolic resin; 3 to 6 percent by weight of metal fibers having a length of 5 millimeters or less; 8 to 11 percent by weight of cryolite; and 0.1 to 0.3 percent by weight of electrically conductive particles.

2. The bonded abrasive article of claim 1, wherein the metal fibers comprise aluminum fibers.

3. The bonded abrasive article of claim 1, further comprising 8 to 11 percent by weight of polytetrafluorethylene particles.

4. The bonded abrasive article of claim 1, wherein the bonded abrasive article comprises a cut-off wheel.

5. A method of making a bonded abrasive article, the method comprising:
combining, on a total weight basis: 30 to 37 percent by weight of ceramic-coated blue fused aluminum oxide particles; 30 to 37 percent by weight of non-seeded sol-gel alumina-based abrasive particles, wherein the non-seeded sol-gel alumina-based abrasive particles are composed of crystallites of alpha alumina, magnesium alumina spinel, and rare earth hexagonal aluminate; 8 to 12 percent by weight of curable novolac phenolic resin; 2.1 to 5.1 percent by weight of curable resole phenolic resin; 3 to 6 percent by weight of metal fibers having a length of 5 millimeters or less; 8 to 11 percent by weight of cryolite; 0.1 to 0.3 percent of a silane coupling agent ; and 0.1 to 0.3 percent by weight of electrically conductive particles; and
curing the curable novolac phenolic resin and curable resole phenolic resin.

6. The method of claim 5, wherein the metal fibers comprises short aluminum fibers.

7. The method of claim 5, wherein the silane coupling agent comprises a gamma-aminopropyltrialkoxysilane.

8. The method of claim 5, further comprising 8 to 11 percent by weight of polytetrafluorethylene particles.

9. The method of claim 5, wherein the bonded abrasive article comprises a cut-off wheel.

## Patentansprüche

1. Schleifgegenstand mit gebundenem Schleifmittel, umfassend, bezogen auf das Gesamtgewicht: 30 bis 37 Gewichtsprozent keramikbeschichtete blaue Elektrokorundteilchen (20); 30 bis 37 Gewichtsprozent Schleifteilchen auf Basis von nach dem Sol-Gel-Verfahren ohne Keimzusatz hergestelltem Aluminiumoxid (21), wobei die Schleifteilchen auf Basis von nach dem Sol-Gel-Verfahren ohne Keimzusatz hergestelltem Aluminiumoxid (21) aus Kristalliten von alpha-Aluminiumoxid, Magnesiumaluminiumoxid-Spinell und hexagonalem Seltenerdmetallaluminat bestehen; ein phenolisches Bindemittel (25), das ein Umsetzungsprodukt von 8 bis 12 Gewichtsprozent härtbarem Phenol-Novolakharz und 2,1 bis 5,1 Gewichtsprozent härtbarem Phenol-Resolharz umfasst; 3 bis 6 Gewichtsteile Metallfasern mit einer Länge von 5 Millimeter oder weniger; 8 bis 11 Gewichtsprozent Kryolith und 0,1 bis 0,3 Gewichtsprozent elektrisch leitfähige Teilchen.

2. Schleifgegenstand mit gebundenem Schleifmittel nach Anspruch 1, wobei die Metallfasern Aluminiumfasern umfassen.

3. Schleifgegenstand mit gebundenem Schleifmittel nach Anspruch 1, ferner umfassend 8 bis 11 Gewichtsprozent Polytetrafluorethylenteilchen.

4. Schleifgegenstand mit gebundenem Schleifmittel nach Anspruch 1, wobei der Schleifgegenstand mit gebundenem Schleifmittel eine Trennscheibe umfasst.

5. Verfahren zur Herstellung eines Schleifgegenstands mit gebundenem Schleifmittel, bei dem man:
bezogen auf das Gesamtgewicht: 30 bis 37 Gewichtsprozent keramikbeschichtete blaue Elektrokorundteilchen; 30 bis 37 Gewichtsprozent Schleifteilchen auf Basis von nach dem Sol-Gel-Verfahren ohne Keimzusatz hergestelltem Aluminiumoxid, wobei die Schleifteilchen auf Basis von nach dem Sol-Gel-Verfahren ohne Keimzusatz hergestelltem Aluminiumoxid aus Kristalliten von alpha-Aluminiumoxid, Magnesiumaluminiumoxid-Spinell und hexagonalem Seltenerdmetallaluminat bestehen; 8 bis 12 Gewichtsprozent härtbares Phenol-Novolakharz; 2,1 bis 5,1 Gewichtsprozent härtbares Phenol-Resolharz; 3 bis 6 Gewichtsteile Metallfasern mit einer Länge von 5 Millimeter oder weniger; 8 bis 11 Gewichtsprozent Kryolith; 0,1 bis 0,3 Prozent eines Silan-Kupplungsmittels und 0,1 bis 0,3 Gewichtsprozent elektrisch leitfähige Teilchen vereinigt und
das härtbare Phenol-Novolakharz und das härtbare Phenol-Resolharz härtet.

6. Verfahren nach Anspruch 5, wobei die Metallfasern kurze Aluminiumfasern umfassen.

7. Verfahren nach Anspruch 5, wobei das Silan-Kupplungsmittel ein gamma-Aminopropyltrialkoxysilan umfasst.

8. Verfahren nach Anspruch 5, ferner umfassend 8 bis 11 Gewichtsprozent Polytetrafluorethylenteilchen.

9. Verfahren nach Anspruch 5, wobei der Schleifgegenstand mit gebundenem Schleifmittel eine Trennscheibe umfasst.

## Revendications

1. Article abrasif aggloméré comprenant, relativement au poids total : 30 % à 37 % en poids de particules d'oxyde d'aluminium bleu fondu revêtues de céramique (20) ; 30 à 37 % en poids de particules abrasives à base d'alumine produites par un procédé sol-gel sans ensemencement (21), les particules abrasives à base d'alumine produites par un procédé sol-gel sans ensemencement (21) se composant de cristallites d'alpha-alumine, de spinelle de magnésium-alumine, et d'un aluminate hexagonal de terre rare ; un liant phénolique (25) qui comprend un produit réactionnel de 8 % à 12 % en poids de résine novolaque phénolique durcissable et de 2,1 % à 5,1 % en poids de résine résol phénolique durcissable ; 3 % à 6 % en poids de fibres métalliques ayant une longueur de 5 millimètres ou moins ; 8 % à 11 % en poids de cryolite ; et 0,1 % à 0,3 % en poids de particules électriquement conductrices.

2. Article abrasif aggloméré selon la revendication 1, dans lequel les fibres métalliques comprennent des fibres d'aluminium.

3. Article abrasif aggloméré selon la revendication 1, comprenant en outre 8 % à 11 % en poids de particules de polytétrafluoréthylène.

4. Article abrasif aggloméré selon la revendication 1, l'article abrasif aggloméré comprenant une meule à tronçonner.

5. Procédé de fabrication d'un article abrasif aggloméré, le procédé consistant à :
combiner, relativement au poids total : 30 % à 37 % en poids de particules d'oxyde d'aluminium bleu fondu revêtues de céramique ; 30 à 37 % en poids de particules abrasives à base d'alumine produites par un procédé sol-gel sans ensemencement, les particules abrasives à base d'alumine produites par un procédé sol-gel sans ensemencement se composant de cristallites d'alpha-alumine, de spinelle de magnésium-alumine, et d'un aluminate hexagonal de terre rare ; 8 % à 12 % en poids de résine novolaque phénolique durcissable ; 2,1 % à 5,1 % en poids de résine résol phénolique durcissable ; 3 % à 6 % en poids de fibres métalliques ayant une longueur de 5 millimètres ou moins ; 8 % à 11 % en poids de cryolite ; 0,1 % à 0,3 % en poids d'un agent de pontage silane ; et 0,1 % à 0,3 % en poids de particules électriquement conductrices ; et
durcir la résine novolaque phénolique durcissable et la résine résol phénolique durcissable.

6. Procédé selon la revendication 5, dans lequel les fibres métalliques comprennent des fibres courtes d'aluminium.

7. Procédé selon la revendication 5, dans lequel l'agent de pontage silane comprend un gamma-aminopropyltrialcoxysilane.

8. Procédé selon la revendication 5, comprenant en outre 8 % à 11 % en poids de particules de polytétrafluoréthylène.

9. Procédé selon la revendication 5, dans lequel l'article abrasif aggloméré comprend une meule à tronçonner.
